# EUROPEAN PATENT APPLICATION

(11) **EP 0 701 967 A1**
(43) Date of publication of application: **20.03.1996**
(21) Application number: 95306406.0
(22) Date of filing: 13.09.1995
(51) Int. Cl.: C01B 17/04

(54) **A method of forming sulphur**

(30) Priority: 19.09.1994 GB 9419133
(71) Applicant: The BOC Group plc, Windlesham Surrey GU20 6HJ (GB)
(72) Inventor: Watson, Richard William, Merrow Park, Guildford, Surrey, GU4 7HJ (GB)
(74) Representative: Wickham, Michael

(57) **Abstract**

In the formation of sulphur from a hydrogen sulphide containing gas stream by the Claus process, a first gas stream comprising hydrogen sulphide is fed to a burner 4 that firs into a furnace 2. A second gas stream comprising oxygen or oxygen-enriched air is supplied from a plant 6 to the burner 4. A third gas stream comprising at least 70% by volume of carbon dioxide is also fed to the burner 4. The mole ratio of oxygen to nitrogen (if present) in the gas supplied to the burner 4 and hence the furnace 2 is at least 8 to 1. Relatively high flows of hydrogen sulphide into the furnace 2 are thereby made possible.

## Description

This invention relates to a method of forming sulphur.

Hydrogen sulphide containing gas streams are typically formed in oil refineries and natural gas processing units. Such streams cannot be vented directly to the atmosphere owing to the poisonous nature of hydrogen sulphide. A conventional method of treating a hydrogen sulphide containing gas stream so as to make it more fit for discharge to the atmosphere comprises separating the gas stream so as to form a more concentrated flow of hydrogen sulphide, burning a part of the hydrogen sulphide content of the flow so as to form sulphur dioxide and water vapour, and causing the sulphur dioxide to react with remaining hydrogen sulphide by the Claus reaction to form sulphur vapour and water vapour. The Claus reaction does not go to completion. In a typical Claus process, there is an initial reaction furnace in which the sulphur dioxide reacts with the hydrogen sulphide followed by a train of stages in which further catalysed reaction between hydrogen sulphide and sulphur dioxide takes place. Resulting sulphur vapour is extracted downstream of the reaction furnace and downstream of each catalytic stage. The effluent gas from the sulphur condenser associated with the final catalytic stage may be incinerated or subjected to further treatment, e.g. by the SCOT or Beavon process, in order to form a gas stream which can be vented to the atmosphere.

Air may be used to support the initial combustion of part of the hydrogen sulphide content of the gas stream to be treated. The stoichiometry of the reactions that take place is such that large volumes of nitrogen present in the air flow through the process and place a ceiling on the rate at which feed gas containing hydrogen sulphide can be treated. This ceiling can be raised by using commercially pure oxygen or oxygen-enriched air to support the combustion of hydrogen sulphide. The effectiveness of this substitution depends on the concentration of hydrogen sulphide in the feed gas and the purity of the oxygen. If the hydrogen sulphide containing feed gas stream includes a relatively high proportion of combustibles, say 70% or more, the use of substantially pure oxygen to support combustion may create furnace temperatures sufficiently high to damage the furnace refractory. In general, it is believed undesirable in the art to exceed a temperature of 1650°C.

There exists a considerable body of patent literature directed at processes which tackle this problem. Much of this literature deals with processes in which two separate furnaces are employed. Thus, the heat released by the combustion of the hydrogen sulphide is spread over two stages rather than one. It is however sometimes desirable to avoid increasing the complexity of the plant and therefore to keep the number of furnaces at the upstream end of the plant to one.

European patent application 0 199 507A discloses a single furnace process in which the temperature of the reacting gas is controlled by introducing into them one or both of a non-combustible vaporisable liquid quenchant and a vaporous quenchant stream comprising at least 80% by volume of steam. In this improvement, liquid water is disclosed as the preferred quenchant. It relies on two properties for its quenchant effect. First, cooling is provided by its enthalpy of vaporisation. Second, it has a molar heat capacity greater than nitrogen. Steam is less preferred since it relies only on the second of the above-mentioned effects. Liquid carbon dioxide is disclosed as a less preferred alternative to water. The disadvantage of liquid carbon dioxide is that it is difficult to handle. In addition, it has a lower molar heat capacity than water.

European patent application 0 315 225A relates to a single furnace process suitable for use in recovering sulphur from a hydrogen sulphide containing feed gas. This process makes use of at least one burner which has a central pipe for oxygen, at least one second pipe for hydrogen sulphide containing feed gas which coaxially surrounds the central pipe, and an external coaxial pipe for air. The process is used when the feed gas contains at least 5% by volume of hydrocarbons or carbon dioxide. The process requires that the oxygen velocity at the outlet of the burner be in the range of 50 to 250 metres per second and the corresponding feed gas velocity in the range of 10 to 30 metres per second. Temperatures in the range of 2000 to 3000°C are generated in the core of the burner flame, and that a gas mixture having a temperature in the range of 1350 to 1650°C leaves the furnace. This gas mixture contains at least 2% by volume of carbon monoxide and at least 8% by volume of hydrogen. In examples of the process, nitrogen-oxygen volume ratios in a range of 1:1 to 0.25:1 are employed. In essence, therefore, the process according to EP-A-0 315 225 uses the nitrogen content of air to moderate temperatures within the furnace.

It is an aim of the present invention to provide a method of forming sulphur which employs a more effective temperature moderator than air (see European patent application 0 315 225) or liquid water (see European patent application 0 199 507) without encountering the handling difficulties entailed in the liquid carbon dioxide.

According to the present invention there is provided a method of forming sulphur, comprising the steps of burning in a furnace a part of a first gas stream comprising hydrogen sulphide and thereby forming combustion products comprising water vapour and sulphur dioxide; reacting so formed sulphur dioxide with residual hydrogen sulphide; supplying a second gas stream comprising oxygen or oxygen enriched air to support combustion of hydrogen sulphide; and supplying a third stream of temperature moderating fluid in gaseous state to the furnace, characterised in that the third stream comprises at least 70% by volume of carbon dioxide gas and that the mole ratio of oxygen to nitrogen (if present) in the gases supplied to the furnace is at least 8 to 1.

The method according to the invention relies for its effectiveness on the fact that at temperatures operated by combustion of hydrogen sulphide there is a significant degree of dissociation of carbon dioxide into carbon monoxide and oxygen. This reaction takes place endothermically and thus has a significant temperature moderating effect. Although as disclosed in European patent application 315 225, water may dissociate in the furnace, in practice the extent of the dissociation is typically limited and the resulting hydrogen and oxygen tend to recombine rapidly at temperatures below the dissociation temperature with the result that any net temperature moderation effect is negligible. On the other hand, the rate of reassociation of carbon monoxide and oxygen is very slow at the low oxygen partial pressures that typically occur in the furnace. The method according to the invention is particularly suited to the formation of sulphur from a first gas stream which is relatively concentrated in hydrogen sulphide, e.g. contains more than 80% by volume and preferably more than 90% by volume of hydrogen sulphide.

The second gas stream may be formed by vaporising pure liquid oxygen. In order to avoid the storage of liquid oxygen on the site where the sulphur formation method according to the invention is performed, the second gas stream may be supplied directly from a plant for the production of oxygen by cryogenic distillation, pressure swing adsorption (PSA) or by membrane separation. PSA plants may be operated particularly economically to give a product having an oxygen concentration typically in the range of 90 to 97%.

The method according to the invention makes it unnecessary to supply any air to the combustion chamber or furnace in addition to the second gas stream.

If desired, the first, second and third gas streams may be supplied independently of one another to one or more burners which fire into the furnace. Accordingly, the third gas stream is introduced directly into the flame zone. In an alternative arrangement, the third gas stream may be premixed with the first or second gas stream.

The third gas stream preferably consists of essentially pure carbon dioxide.

The method according to the invention will now be described by way of example with reference to the accompanying drawings, in which:
Figure 1 is a schematic flow diagram of a plant for recovering sulphur from a hydrogen sulphide containing gas stream;
Figure 2 is a schematic side elevation, in section, of the distal end of a burner for use in the plant shown in Figure 1; and
Figure 3 is a section through the line III-III shown in Figure 2.

The drawings are not to scale.

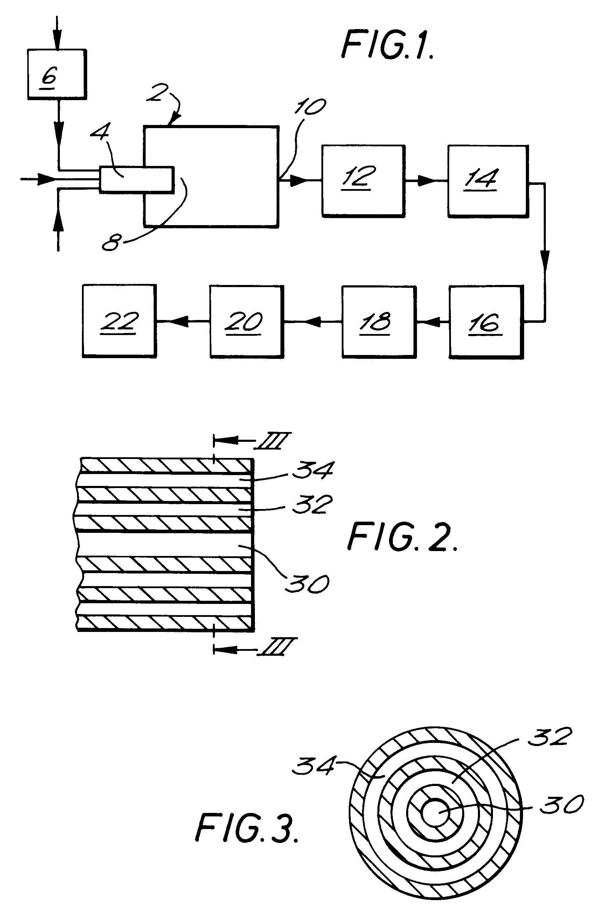

Referring to Figure 1 of the accompanying drawings, a furnace (or combustion chamber) 2 is fitted at one end thereof with a burner 4 which fires into the interior of the furnace 2. The burner 4 is fed with three gas streams which do not impinge upon one another until downstream of the tip of the burner 4 within the furnace 2. The first gas stream consists essentially of hydrogen sulphide, water vapour and carbon dioxide. Typical compositions include at least 90% by volume of hydrogen sulphide. A second gas stream comprises impure oxygen supplied from a pressure swing adsorption plant 6. A typical composition of the second gas stream is 92% by volume of oxygen and 8% in total by volume of argon and nitrogen. The third gas stream comprises essentially pure gaseous carbon dioxide. No carbon dioxide is supplied to the burner 4 in liquid state. The ratio of nitrogen to oxygen in the gases entering the furnace 2 is therefore 1:11.5. On entering a flame zone 8 created by the burner 4, the first, second and third gas streams mix with one another. Combustion of a part of the hydrogen sulphide takes place in the flame zone in accordance with the equation:

2H₂S + 3O₂ = 2SO₂ + 2H₂O

Resulting sulphur dioxide reacts with hydrogen sulphide both within and outside the flame zone in accordance with the equation:

2H₂S + SO₂ = 3S + 2H₂O

Since the second gas stream comprises essentially pure oxygen, relatively high flame temperatures are created in the interior of the flame zone 8. These flame temperatures are sufficiently high for both hydrogen sulphide and carbon dioxide respectively to dissociate in accordance with the equations:

H₂S = H₂ + S

and

2CO₂ = 2CO + O₂

The dissociation of hydrogen sulphide tends to reverse itself to a large extent when the temperature of the gases falls outside the flame zone. The reassociation of carbon monoxide and oxygen into carbon dioxide is however limited under the conditions that occur in the furnace 2 since the oxygen introduced into the furnace 2 and the oxygen formed in in situ by the dissociation of carbon monoxide react much more quickly with other species present than with carbon monoxide. Overall, the process operates under reducing conditions and all the oxygen is consumed. Various other reactions will take place depending on the particular operating conditions in the furnace 2. For example, carbon monoxide reacts with sulphur vapour to form carbon oxysulphide. Carbon disulphide is also formed.

It is conventional in the operation of a furnace such as the furnace 2 illustrated in Figure 1 of the drawings to supply one mole of oxygen for each two moles of hydrogen sulphide so as to produce a gas mixture in which at furnace exit 10 the mole ratio of hydrogen sulphide to sulphur dioxide is in accordance with the stoichiometry of the reaction between hydrogen sulphide and sulphur dioxide. One of the advantages of the method according to the invention is that by supplying carbon dioxide as the third gas stream, oxygen is formed in situ through dissociation of the carbon dioxide and that accordingly, the rate of supply of oxygen in the form of the second gas stream can be less than it would be in for example a comparable process according to European patent 315 225.

A gas mixture consisting essentially of hydrogen sulphide, sulphur dioxide, sulphur vapour, water vapour, carbon dioxide, hydrogen and carbon monoxide and also including minor amounts of carbon oxysulphide and carbon disulphide and other molecular species leaves the furnace exit 10 at a temperature typically in the range of 1350 to 1650°C. The temperature may be selected in accordance with the choice of refractory material for lining the interior walls of the furnace 2. Modern refractories can typically withstand operating temperatures of up to 1650°C. The temperature control is exerted by selection of the rate at which the third gas stream is supplied to the furnace 2 relative to the first and second gas streams.

The gas mixture leaving the exit 10 of the furnace 2 passes through a waste heat boiler 12 so as to reduce its temperature to a little above the point at which sulphur vapour condenses and, downstream of the waste heat boiler 12, through a condenser 14 in which the gas mixture is cooled to below the dew point of sulphur so as to form liquid sulphur. This liquid sulphur is passed to storage. The resulting gas mixture flows from the condenser 14 through successive catalytic Claus stages 16, 18 and 20. Each of the stages 16, 18 and 20 may in accordance with the general practice in the art comprise a train of units consisting in sequence of a reheater to raise the temperature of the gas mixture to a temperature suitable for catalytic reaction between hydrogen sulphide and sulphur dioxide, a catalytic reactor in which hydrogen sulphide reacts with sulphur dioxide to form sulphur and water vapour, and a sulphur condenser. If desired, depending on the environmental standards which the plant shown in Figure 1 of the drawings is required to meet, one of the catalytic stages 16, 18 and 20 may be omitted.

The gas mixture leaving the most downstream catalytic stage 20 may be subjected to any one of a number of known treatments for rendering Claus process effluent suitable for discharge to the atmosphere. For example, the gas mixture may pass to a hydrolysis reactor 22 in which the components present in the gas mixture are subjected to hydrolysis and hydrogenation. It is a feature of the process according to the invention that the waste gas contains sufficient hydrogen to avoid the need to supply extraneous hydrogen for the hydrogenation. In the reactor 22, the residual carbon oxysulphide and carbon disulphide are hydrolysed with water vapour to produce hydrogen sulphide over a catalyst, for example alumina impregnated with cobalt and molybdenum. Such catalysts are well known in the art. At the same time, residual elemental sulphur and sulphur dioxide are hydrogenated to form hydrogen sulphide. The hydrolysis and hydrogenation takes place on the aforesaid impregnated alumina catalyst typically at temperatures in the range of 300 to 350°C. A resulting gas mixture consisting essentially of hydrogen sulphide, nitrogen, carbon monoxide, carbon dioxide, water vapour and hydrogen leaves the reactor 22 and flows to a separation unit 24 in which hydrogen sulphide is separated, for example by chemical absorption. A suitable chemical absorbent is a methyl diethylamine. If desired, the hydrogen sulphide may be recycled to the furnace 2, for example by being mixed with incoming hydrogen sulphide containing gas mixture so as to form the first gas stream or may be recycled to the first catalytic stage.

One suitable construction of the burner 4 is illustrated in Figures 2 and 3 of the accompanying drawings. The burner comprises a central passage 30 for the first feed gas stream surrounded by and coaxial with a second passage 32 for the second gas stream which is in turn surrounded coaxial with the third passage 34 for the third gas stream. In such an arrangement, a flame with a high temperature zone at its root is created. However, an outer envelope of carbon dioxide helps to provide a relatively low temperature at the periphery of the flame and thus can be used to ensure that damage is not done to the refractory lining of the furnace 2 shown in Figure 1.

Various alternative arrangements of the passages for the first and second gas streams are possible. In particular, each of these gas streams may be subdivided into a plurality of subsidiary streams with each subsidiary first gas stream being surrounded at the tip of the burner by several subsidiaries of the second gas stream. Such an arrangement enhances mixing of oxygen and hydrogen sulphide and facilitates the creation of a stable flame.

The method according to the invention is further illustrated by the following simulated Examples which relate to the operation of the furnace 2 shown in Figure 1 of the drawings.

In all the Examples, the first gas stream fed to the burner 4 consisted of a mixture of 66.7 mole % amine gas and 33.3 mole % sour water stripper gas. The amine gas had the following composition:
H₂S - 90 mole %; H₂O - 6 mole %;
CO₂ - 3 mole % C₂H₆ - 1 mole %;

The sour water gas had the following composition:
H₂S - 33.3 mole %; H₂O - 33.3 mole %;
NH₃ - 33.4 mole %;

In Example 1 (a comparative example) the second and third gas stream both consisted of air. The exit temperature of the gas mixture leaving the furnace was 1300°C and its relative mass flow rate was 1.00. For the purpose of the Examples, relative mass flow rate is defined as the ratio of the mass flow rate at the exit from furnace 2 in a given Example to the mass flow rate at the exit from furnace 2 in Example 1.

In Example 2 (another comparative example), the second gas stream consisted of pure oxygen, and the third gas stream consisted of air. The relative rates of supply of the second and third gas streams were such that, if fully mixed with one another, they would form a gas mixture consisting of 32 mole % of oxygen and 68 mole % of nitrogen. The exit temperature of the gas mixture leaving the furnace was 1550°C and its relative mass flow rate was 0.70.

In Example 3, in accordance with the invention, the second gas stream consisted of pure oxygen, and the third gas stream consisted of pure carbon dioxide. The relative rates of supply of the second and third gas streams were such that, if fully mixed with one another, they would form a gas mixture consisting of 57 mole % of oxygen and 43 mole % of carbon dioxide. The exit temperature of the gas mixture leaving the furnace was 1550°C and its relative mass flow rate was 0.54.

In comparison with Example 1, Example 2 gives a 43% uprating of the furnace 2, whereas Example 3 gives an 85% uprating.

## Claims

1. A method of forming sulphur, comprising the steps of burning in a furnace a part of a first gas stream comprising hydrogen sulphide and thereby forming combustion products comprising water vapour and sulphur dioxide; reacting so-formed sulphur dioxide with residual hydrogen sulphide; supplying a second gas stream comprising oxygen or oxygen-enriched air to support combustion of hydrogen sulphide; and supplying a third stream of temperature moderating fluid in gaseous state to the furnace, characterised in that the third stream comprises at least 70% by volume of carbon dioxide gas and that the mole ratio of oxygen to nitrogen (if present) in the gases supplied to the furnace is at least 8 to 1.

2. A method as claimed in claim 1, in which the first, second and third streams are supplied independently of one another to one or more burners which fire into the furnace.

3. A method as claimed in claim 1, in which the third gas stream is premixed with the first or second gas stream.

4. A method as claimed in any one of the preceding claims in which the third gas stream consists of pure carbon dioxide.

5. A method as claimed in any one of the preceding claims, in which the second gas stream is separated from air by pressure swing adsorption.
